# EUROPEAN PATENT APPLICATION

(11) **EP 0 573 828 A2**
(43) Date of publication of application: **15.12.1993**
(21) Application number: 93108233.3
(22) Date of filing: 21.05.1993
(51) Int. Cl.: H02M 3/156, H02M 1/00

(54) **Improvement in power supplies**

(30) Priority: 05.06.1992 IT PN920044
(71) Applicant: ZELTRON S.p.A., I-33030 Campoformido, Udine (IT)
(72) Inventor: Muzzolini, Dario, I-33010 Magnano in Riviera, Udine (IT)
(74) Representative: Giugni, Valter

(57) **Abstract**

Power supply unit comprising a rectifier means (4), an inductor (10), a power switch (6), an output rectifier (1), an output filter capacitor (11) and a control circuit (2), wherein said control circuit (2) consists of an error amplifier (7), a multiplier (8) and a pulse modulator (9) arranged in parallel.

The error amplifier (7) receives a constant reference voltage and compares it with the voltage at the output of the filter capacitor (11) of the power supply, thereby generating an error signal that is sent to a multiplier (8), which is also supplied with the rectified input voltage from the input rectifier (4), so that said multiplier performs a multiplication of said signals and generates in turn a multiplication signal that is applied to a pulse modulator (9) that issues corresponding control pulses for the power switch (6).

## Description

This invention relates to an improvement in a switched-mode power supply, particularly for low-to-medium power applications, which is required not to propagate interference or noise signals into the power supply line.

Standard regulations already applying, or expected to come into force in Europe in the near future, call for the phase and the harmonic content of the current absorbed from the power distribution and supply line by home and similar appliances to be appropriately controlled.

In particular, reference is made to power supplies that shall be able to ensure a high power factor even under moderately reactive load conditions.

The behaviour of the appliance shall be as close as possible to the one typical of a pure resistance, which implies that is shall absorb from the power supply line a sine-wave current that is in phase with the voltage. Power supplies of the so-called boost type are known to exist on the market, which quite often are oversized, ie. have characteristics that are in excess of the actual average requirements. Such power supplies are regulated by special control devices, such as for instance the Unitrode UC 3854 integrated circuit , which is redundant in some of its performance capabilities (broad available voltage range, Vin = 90 to 270 VDC, with a power factor P.F. = 0.999), but is rather expensive, whereas the UC3852 integrated circuit is somewhat cheaper, but has only moderate power delivery capabilities and may bring about some drawbacks in connection with the control of power-supply line noise interferences.

It therefore would be desirable, and it is actaully an object of the present invention, to provide a power supply for applications involving medium power ratings, which enables its costs to be kept within reasonably low limits, by doing away with performance capabilities that are not necessary, and which is adequately simple and easy to manufacture according to normally available techniques and using normally available component parts.

This and further aims of the present invention are reached in a boost-type power supply wherein phase-shift control is carried out by an appropriate control circuit based on the signal feedback principle, as it is described in the appended claims.

For a better understanding, the invention will be further described below by way of non-limiting example with reference to the accompanying drawings in which:
- Figure 1 is a view showing the block diagram of a power supply circuit according to the present invention;
- Figure 2 is a view showing the block diagram of the phase-shift control circuit according to the present invention;
- Figure 3 is a view in detail of an embodiment of the phase-shift control circuit shown in Figure 2.

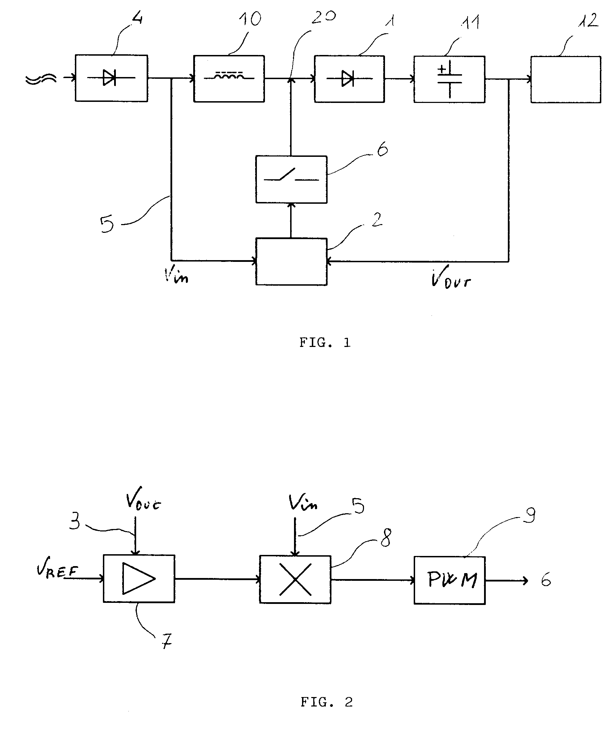

Referring now to Figure 1, the basic idea behind the present invention essentially lies in deriving the output voltage Vin from the input rectifier 4 so as to correspondingly send it to the same control circuit 2 through a connection 5.

The purpose of said control circuit 2 lies in controlling the conduction times of the power switch 6 which periodically short-circuits to ground the point 20 located between the smoothing choke 10 and the output rectifier 1, so as to enable the power supply to absorb from the power supply line a current which is almost sine-wave in its shape and in phase with the voltage.

Said current is then rectified by the output rectifier 1 and smoothed by the filter capacitor 11 before being sent to the load 12.

If reference is made now to Figure 2, it can be noticed that the control circuit consists of three sub-assemblies, ie. the error amplifier 7, the multiplier 8 and the modulator 9, which sends the thus generated control signal to the power switch 6.

Said circuit operates in the following way: an operational amplifier 7 (acting as an error amplifier) compares a fraction of the output signal from the rectifier 1, through the connection 3, with a reference voltage. It then sends the resulting signal to a multiplier 8, comprising a FET device, which receives, at its other input on the connection 5, a fraction of the rectified power supply line voltage from the output of the line rectifier 1.

The product of such a quantity is a current whose amplitude is variable in accordance with the stabilization requirements in connection with the output voltage Vout on the connection 3, but having a shape similar to the one of the input voltage Vin existing on the connection 5, ie. a full, rectified sine wave.

Such a corrent is then converted into voltage by a further provided operational circuit, whereby the resulting voltage , whose phase is of course reversed as compared with the one of the input voltage Vin, drives a pulse-modulator circuit 9 that controls the conduction times of the power switch 6, thereby enabling the power supply to absorb from the power supply line a current that is almost sine-wave in its shape and in phase with the corresponding voltage.

A further advantage of the present invention is fully apparent now: in fact, the possibility for the power supply connected in series with the load tp operate with characteristics resembling a pure or almost pure resistance enables the power available for a given load to be fully used, as anyone skilled in the art knows.

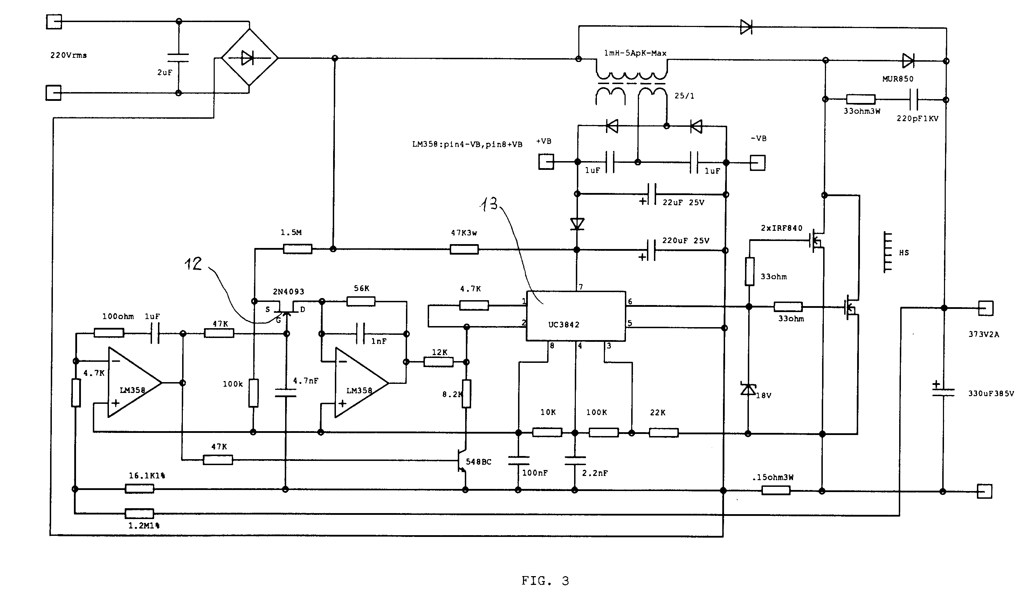

With reference to Figure 3, which shows the complete circuit schematics of a power supply according to the present invention, an advantageous configuration of the described embodiment can be noticed: the multiplier 8 is in fact constituted by a N-type FET transistor 12 supplying an operational amplifier 13 which is adapted to convert the current produced by the multiplication into a voltage signal.

## Claims

1. Power supply comprising rectifier means (4), an inductor means (10), a power switch (6), an output rectifier means (1), an output filter capacitor (11) and a control circuit (2), **characterized in that** said control circuit (2) consists of an error amplifier (7), a multiplier (8) and a pulse modulator (9) connected in series with each other.

2. Power supply according to claim 1, **characterized in that** the error amplifier (7) is fed with a constant reference voltage and compares it with the voltage at the output of the filter capacitor (11) on the output side of the power supply, thereby generating an error signal; that said error signal is sent to a multiplier (8) which is also supplied with the rectified input voltage from the input rectifier (4), said multiplier carrying out the multiplication of said signals and generating a respective multiplication signal that is applied to a pulse modulator (9) which sends out corresponding control pulses for the power switch (6).

3. Power supply according to claim 2, **characterized in that** said power switch (6) is arranged to connect to ground the point (20) located between the smoothing choke (10) and the output rectifier (1) upon receiving said control pulses from the pulse modulator (9) .

4. Power supply according to claim 3, **characterized in that** the multiplier (8) consists of a n-channel field-effect transistor (12) supplying an operational amplifier (13), said operational amplifier (13) being arranged to convert the current generated by said multiplication into a voltage signal.
